# EUROPÄISCHE PATENTSCHRIFT

(11) **EP 0 787 053 B1**
(45) Veröffentlichungstag und Bekanntmachung des Hinweises auf die Patenterteilung: **22.05.2002**
(21) Anmeldenummer: 96920681.2
(22) Anmeldetag: 11.07.1996
(51) Int. Cl.: B23D 35/00

(54) **EINRICHTUNG ZUR VERARBEITUNG VON ZWISCHEN ZWEI ZUSAMMENWIRKENDEN ARBEITSZYLINDERN EINER VERARBEITUNGSEINHEIT VERLAUFENDEN BAHNEN ODER BOGEN AUS PAPIER ODER DGL.**
DEVICE FOR PROCESSING WEBS OR SHEETS OF PAPER OR THE LIKE RUNNING BETWEEN TWO CO-OPERATING WORKING CYLINDERS OF A PROCESSING UNIT
DISPOSITIF DESTINE A LA TRANSFORMATION DE BANDES OU DE FEUILLES DE PAPIER OU EQUIVALENT DEFILANT ENTRE DEUX CYLINDRES COOPERANT D'UNE UNITE DE TRANSFORMATION

(30) Priorität: 20.07.1995 CH 213595
(43) Veröffentlichungstag der Anmeldung: 06.08.1997
(73) Patentinhaber: GRAPHA-HOLDING AG, 6052 Hergiswil (CH)
(72) Erfinder: BEHRINGER, Richard, D-79694 Utzenfeld (DE); RUDIGER, Jürgen, D-79669 Zell (DE)
(86) Internationale Anmeldenummer: CH9600255
(87) Internationale Veröffentlichungsnummer: WO9703780

(56) Entgegenhaltungen:
- EP-A- 0 236 499
- EP-A- 0 390 689
- GB-A- 2 046 664

## Beschreibung

Die Erfindung betrifft eine Rollenrotationseinrichtung zur Verarbeitung von zwischen zwei gegenläufig rotierend zusammenwirkenden Arbeitsrollen einer Verarbeitungseinheit verlaufenden Bahnen oder Bogen aus Papier, textilen oder Kunststoffen, bei der die gegenseitig verspannten Arbeitsrollen durch ihre seitlichen Lagergehäuse einzeln mit einem Maschinenständer der Einrichtung lösbar verbunden sind und die zum Abheben sowie zur seitlichen Ein- und Auslagerung der Arbeitsrollen eine Aushebevorrichtung aufweist. Eine Einrichtung dieser Art ist z.B. aus EP-A-0 236 499 bekannt.

Betroffen davon sind u.a. Einrichtungen zum Perforieren, Stanzen, Lochen und Schneiden der erwähnten Stoffe, die wenigstens zwei in einer Verarbeitungseinheit zusammenwirkende, im Näherungsbereich um paralle Drehachsen gegenläufig rotierende Arbeitsrollen oder Werkzeugzylinder aufweisen.
Dabei sind die Arbeitsrollen gegenseitig auf Schmitzringen laufend abgestützt bzw. letzere über seitliche Lagergehäuse der Arbeitsrollen bzw. -zylinder aneinandergepresst, so dass zwischen den Auflageflächen der Lagergehäuse ein geringer Spalt von etwa 0,2 mm vorliegt.
Das Aneinanderpressen der Schmitzringe wird u.a. durch Verschrauben der seitlichen Lagerschilde der Arbeitsrollen erreicht.

Eine weitere Anforderung besteht bei einer Perforiereinheit mit Perforierwerkzeugen darin, dass das gegenseitige Zusammenwirken zweier Perforierwerkzeugteile unterbunden werden kann, indem diese ohne den Zahneingriff der sich gegenüberliegenden Antriebsräder vollständig aufzugeben durch Distanzieren der Schmitzringe voneinander abgehoben werden, um die Wirkung der Perforiereinheit auszuschalten, einzurichten oder eine Papierbahn an einer Klebeverbindung nicht zu beschädigen.

Darüberhinaus ist zu gewährleisten, dass die Arbeitsrollen auf einfache Art ausgewechselt werden können.

Das Aneinanderpressen der Schmitzringe erfolgt bislang über jeweils wenigstens zwei einem Lagergehäusepaar zugeordnete Schrauben, die beabstandet von einer durch die Drehachsen der Perforierwerkzeuge oder Arbeitsrollen verlaufenden Ebene angeordnet sind.

Für das An- oder Ausheben resp. Auswechseln einer Arbeitsrolle oder eines -zylinders war ein Flaschenzug oder dgl. erforderlich, der ein exaktes Positionieren jedoch nicht gestattet.

Die EP-A-0236499 offenbart eine Vorrichtung zum Auswechseln eines Schneid- oder Walzzylinders an einer Maschine für die Verarbeitung von Wellkarton zu Schachteln. Diese Vorrichtung ist zum Abheben sowie zur seitlichen Ein- und Auslagerung der Verarbeitungszylinder ausgebildet, verfügt jedoch über keine Mittel, zur gegenseitigen Vorspannung der Verarbeitungszylinder in der Betriebsstellung.

Aufgabe der Erfindung ist es, eine Einrichtung der eingangs genannten Art zu schaffen, die universell einsetzbar ist und eine genaue Positionierung unter den gestellten Anforderungen und Umständen gestattet.

Erfindungsgemäss wird diese Aufgabe dadurch gelöst, dass die Aushebevorrichtung zur Vorspannung der Arbeitsrollen in der Betriebsstellung ausgebildet ist.
Dadurch kann eine ausgeglichene Vorspannkraft zwischen den Arbeitsrollen resp. in der Arbeitseinheit bewirkt und ein exaktes Anheben, Ein- und Auslagern der Arbeitsrollen durchgeführt werden.

Davon betroffen sind Perforationseinrichtungen für Längs- und Querperforationen, d.h. mit scheibenförmigen resp. zylindrischen Arbeitsrollen, Stanz- oder Prägeeinrichtungen sowie Schneideinrichtungen, insbesondere Querschneider.

Dadurch kann eine ausgeglichene Vorspannkraft zwischen den Arbeitsrollen resp. in der Arbeitseinheit bewirkt und ein exaktes Anheben, Ein- und Auslagern der Arbeitsrollen durchgeführt werden.

Davon betroffen sind Perforationseinrichtungen für Längs- und Querperforationen, d.h. mit scheibenförmigen resp. zylindrischen Arbeitsrollen, Stanz- oder Prägeeinrichtungen sowie Schneideinrichtungen, insbesondere Querschneider.

Nachstehend wird die Erfindung unter Bezugnahme auf die Zeichnung, auf die bezüglich aller in der Beschreibung nicht näher erwähnten Einzelheiten ausdrücklich verwiesen wird, anhand eines Ausführungsbeispiels erläutert. In der Zeichnung zeigen:
- Fig. 1: eine Seitenansicht einer Querperforationseinrichtung nach einer erfindungsgemässen Ausführung,
- Fig. 2: einen Querschnitt nach der Linie A - A in Fig. 2,
- Fig. 3: eine vergrösserte, auszugsweise Schnittdarstellung nach der Linie B - B in Fig. 1,
- Fig. 4: eine Seitenansicht der Ausführung nach Fig. 1 in Ausserbetriebsstellung der Querperforationseinrichtung und
- Fig. 5: eine Seitenansicht der Ausführung nach Fig. 1 und 4 in der Ein- und Auslagerungsposition.

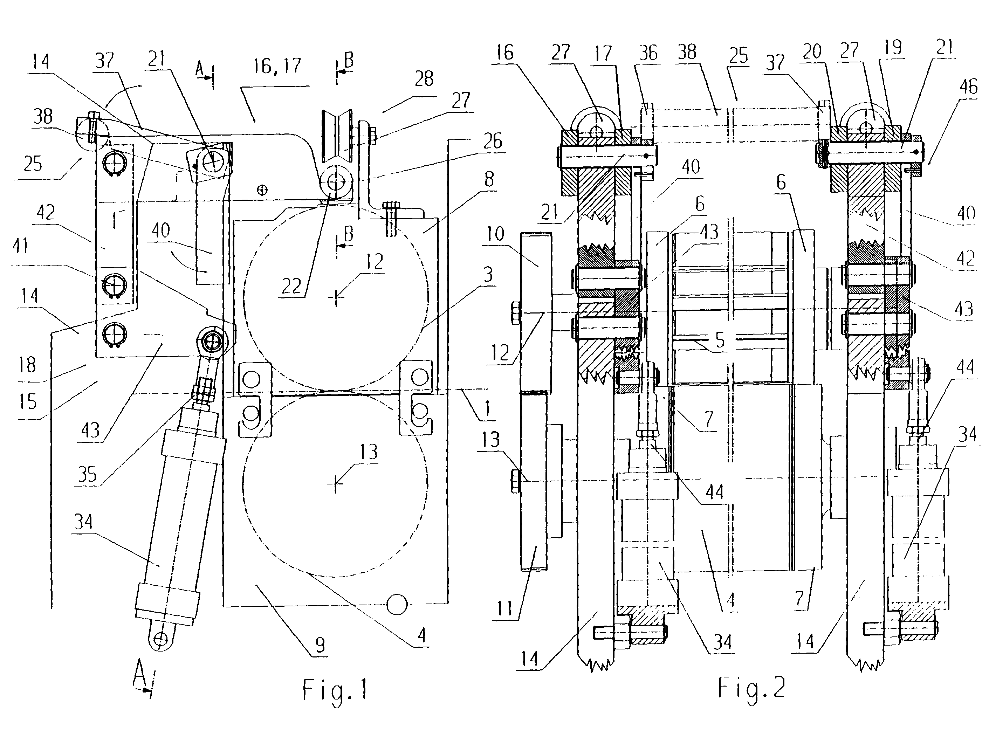

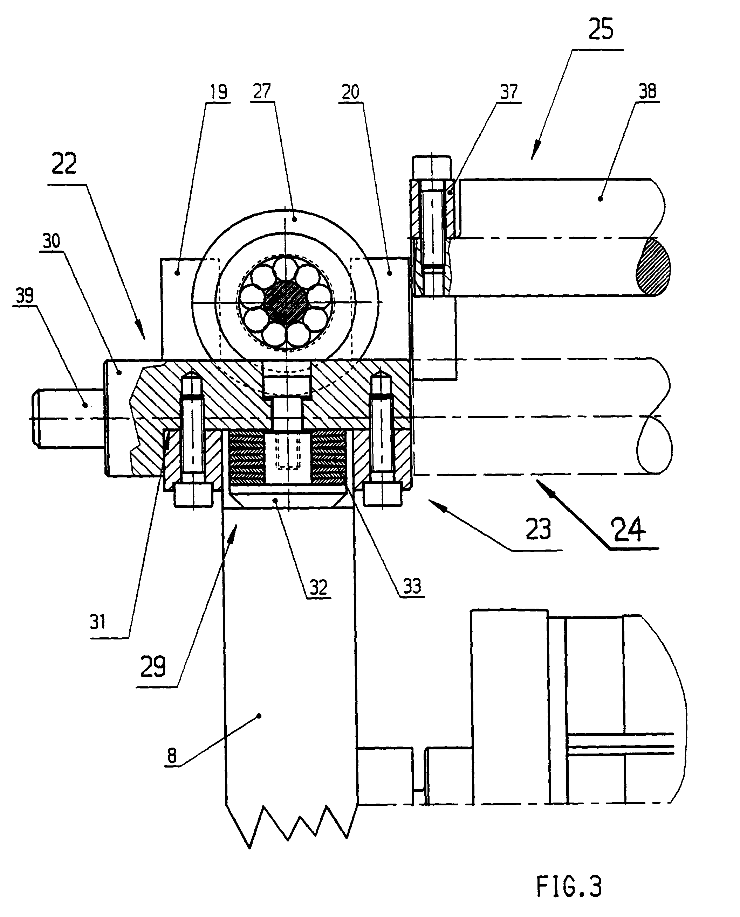

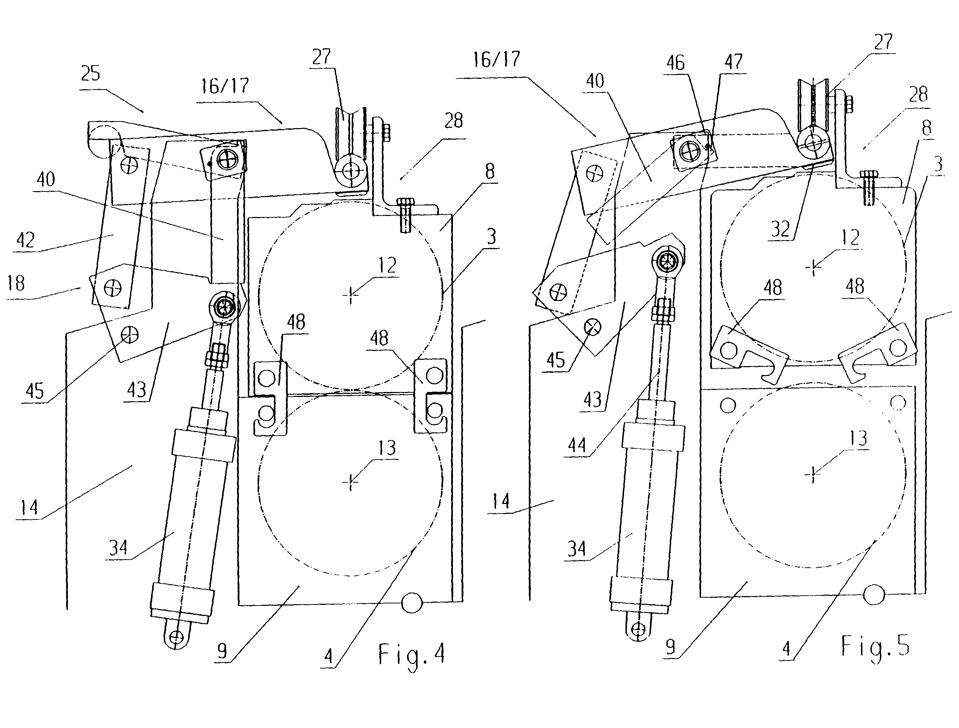

Die Fig. 1 und 2 veranschaulichen eine Ausführungsform der Erfindung an einer Querperforationseinrichtung für eine Papierbahn 1. Hierzu sind in Fig. 1 mit strichpunktiert gezeichneten Kreisen die Flugbahnen des oben liegenden Querperforierzylinders 3 oder Werkzeugzylinders und eines glatten Ambosszylinders 4 angedeutet, wogegen in Fig. 2 die Perforiermesser 5 über die Breite des Perforierzylinders 3 dargestellt sind. Beide Zylinder 3, 4 sind über seitliche, aufeinander wälzende Schmitzringe 6 gegeneinander verspannt in seitlichen Lagergehäusen 8, 9 gelagert. Die gegenläufige Drehrichtung ist durch die beiden Zahnräder 10, 11 und die entsprechenden Drehachsen 12, 13 gezeigt.
In Fig. 1 ist der Maschinenständer 14 vermerkt, mit welchem die Perforationseinrichtung lösbar verbunden ist. Perforations- 3 und Ambossylinder 4 bilden eine Verarbeitungseinheit.
Das Vorspannen der Zylinder 3, 4, das Anheben des Perforationszylinders 3 von dem Ambosszylinder 4 in eine Ausserbetriebsstellung und das Auswechseln eines oder beider Zylinder 3, 4 erfolgt mittels einer Aushebevorrichtung 15, die mit dem Maschinenständer 14 verbunden ist.
Die Aushebevorrichtung 15 besteht aus zwei, jeweils in der durch die Drehachsen 12, 13 gebildeten Ebene auf die Lagergehäuse 8 des Perforationszylinders 3 einwirkenden Hebeln 16, 17, die zweiarmig ausgebildet sind und am Maschinenständer 14 schwenkbar lagern. Dabei ist das eine freie Ende des Hebels 16, 17 dem Lagergehäuse 8 zugewendet und das gegenüberliegende Hebelende mit einer Betätigungsvorrichtung 18 verbunden. Die Hebel 16, 17 sind durch zwei gleichförmige parallele Hebelteile 19, 20 ausgebildet, die an einer im Maschinenständer 14 angeordneten Welle 21 lagern.
Das der Perforationseinrichtung zugeordnete Hebelende weist eine nach oben gerichtete Aufnahmevorrichtung 22 und eine auf der gegenüberliegenden Seite, dem Lagergehäuse 8 zugewendete Spannpratze 23 auf.
Die Aufnahmevorrichtung 22 dient dem An- oder Ausheben der Zylinder 3, 4 im bzw. aus dem Maschinenständer 14 resp. dem Einbau der Zylinder 3, 4. Die Aufnahmevorrichtung 22 ist Teilwerk einer parallel zu den Drehachsen 12, 13 der Zylinder 3, 4 oder quer zur Papierbahn 1 verlaufenden Verschiebebahn 24, die zwischen den Hebeln 16, 17 durch ein zustellbares Verbindungselement 25 unterbrochen werden kann.
Oberhalb der Aufnahmevorrichtung 22 ist eine an einem am Lagergehäuse 8 festgeschraubten Gestell 26 freilagernde Laufrolle 27 eines Aushebebockes 28 angeordnet, an dem der obere oder beide Zylinder 3, 4 gemeinsam angehoben oder abgesenkt und seitlich verschoben werden können, sofern die Verschiebebahn 24 nicht unterbrochen ist. Durch Anheben der Hebel 16, 17 wird der obere Zylinder 3 oder werden beide Zylinder 3, 4 gemeinsam aus der Betriebslage gehoben. Die Zustellung des Verbindungselementes 25, sodass mit den Aufnahmevorrichtungen 22 eine ebene Verschiebebahn 24 entsteht, erfolgt durch eine Schwenkbewegung von ca. 180° um die Achse der Welle 21, an der die Hebel 16, 17 lagern. Die Hebel 16, 17 sind an ihren Aufnahmevorrichtungen 22 besitzenden Enden mit einer von einem Kraftpuffer beaufschlagbaren Spannpratze 29 ausgebildet, die dem Lagergehäuse 8 zugewendet ist.
Die Aufnahmevorrichtung 22 an den Hebelenden besitzt ein Teilstück 30 der Verschiebebahn 24. bspw. in Form eines zylindrischen Baustahls, das zur Bildung einer Befestigungsfläche für die Spannpratze 29 und zur lösbaren Verbindung mittels Schrauben mit dem Hebelende eine Ausnehmung 31 aufweist.
Die Spannpratze besteht aus einem Abstützteller 32, der in einer Bohrung des Teilstückes 30 verschiebbar geführt ist und zwischen dem und der Befestigungsfläche eine Druckfeder 33, hier Tellerfeder als Kraftpuffer eingespannt ist.
In der Vorspannfunktion werden die Hebel 16, 17 jeweils von einem, auf die Betätigungsvorrichtung 18 einwirkenden, an dem Maschinenständer 14 abgestützten Hubzylinder 34 in eine durch einen Anschlag 35 bestimmte Vorspannlage gemäss Fig. 1 und 3 versetzt, sodass die Druckfedern 33 den Vorspanndruck auf die Lagergehäuse 8, 9 ausüben können. Der Vorspanndruck kann durch die Wahl einer Druckfeder 33 beliebig bestimmt werden. Das sich in einer Ausserbetriebsstellung befindende Verbindungselement 25 ist an den Enden mit Schwenkhebeln 36, 37 ausgebildet, die zwischen den Hebeln 16, 17 auf der Welle 21 befestigt sind. Das als Schiene ausgebildete Verbindungselement 25 weist als Zwischenteilstück 38 das gleiche Laufprofil wie die Teilstücke 30 auf und liegt in der Betriebsstellung auf Stützelementen der Teilstücke (nicht ersichtlich), einen bündigen Schienenübergang bildend, auf.
Das an der Seite der Aufnahmevorrichtung 22 abstehende Stützelement 39 ist zur Auflage einer Verlängerung der Verschiebebahn 24 für das seitliche Ein- und Ausfahren der mit dem fahrbaren Aushebebock 28 verbundenen Zylinder 3, 4 ausgebildet. Die Fig. 4 zeigt eine Ausserbetriebslage des Perforierzylinders 3, in welcher letzterer von dem Ambosszylinder 4 -bestimmt resp. begrenzt durch die eingelegte Sperrklinke 40- um einige Zentelmillimeter abgehoben ist, sodass der Schneideingriff mit der durchlaufenden Bahn unterbrochen ist. Die Zahnräder beider Zylinder 3, 4 bleiben jedoch zur Aufrechterhaltung des Schneidformates im Eingriff.
Diese Aushebestelle wird durch eine Sperrklinke 40 begrenzt, die mit der Schwenkbewegung des Verbindungselementes 25 gekuppelt ist.
Fig. 1 zeigt die Sperrklinke 40 bei zurückgeschwenktem Verbindungselement 25 in der Sperrlage, etwa senkrecht hängend ausgerichtet; die Hebel 16, 17 sind auf Vorspannung der Zylinder 3, 4 eingestellt, wobei die Mutter am zurückgezogenen Kolben des Hubzylinders 34 als Anschlag 35 dient.
Die als Hebelgetriebe ausgebildeten Betätigungsvorrichtungen 18, bestehend jeweils aus zwei, ein Kniegelenk 41 bildenden Hebel 42, 43, verbindet einerseits den Hebel 16, 17 an seinem der Spannpratze 23 an der Schwenkachse gegenüberliegenden Hebelende und andererseits die Kolbenstange 44 des Hubzylinders 34. Der als Doppelhebel zwei rechtwinklig zueinander angeordnete Hebelarme aufweisende Hebel 43 bildet mit dem Hebel 42 einen Kniehebel, der in eine steife Totpunktlage versetzt werden kann, sodass der Hubzylinder 34 in dieser Lage unbelastet ist.

In der Ausserbetriebsstellung nach Fig. 4 ist die Position der Betätigungsvorrichtung 18 dargestellt, wobei sich Hebel 43 an dem freien Ende der Sperrklinke 40 aufstützt und das aus den Hebeln 42, 43 gebildete Kniegelenk 41 aus der Totpunktlage versetzt ist.

Fig. 5 verweist auf die Lage der Aushebevorrichtung 15, in welcher die Zylinder 3, 4 -in Fachkreisen auch Einschübe genannt- in den Maschinenständer 14 ein- oder ausgebaut werden.
Dabei ist erkennbar, dass die Perforationseinrichtung 3 weiter als in der in Fig. 4 gezeigten Lage angehoben und dass die Sperrklinke 40 in eine Ruhelage versetzt ist. Bevor die Sperrklinke 40 aus der Betriebslage versetzt werden kann, ist der Kniehebel 43 um seine Anlenkachse 45 durch Zurückziehen der Kolbenstange 44 zu befreien.
Nun kann das Verbindungselement 25 in seine Funktionslage gemäss Fig. 5 verschwenkt werden.
Durch diese Schwenkbewegung wird die Sperrklinke 40 um ihre Schwenkachse angehoben, sodass sie die Ausstossbewegung der Kolbenstange 44 freistellt.
Da die Schwenkbewegung des Verbindungselementes etwa 180°, diejenige des mit ihr gekoppelten Sperrhebels 40 etwa 50° beträgt, ist eine entsprechende konstruktive Vorkehrung zu treffen, die dieser Situation angepasst ist. An der Welle 21, mit der die Schwenkhebel 36, 37 des Verbindungselementes 25 fest verbunden sind, ist neben der frei lagernden Sperrklinke 40 ein mit der Welle 21 drehfest verbundener Mitnehmer 46 angeordnet. Letzterer besteht aus einer Platte und einem seitlich abstehenden Mitnehmerstift. In der Betriebsstellung der Sperrklinke 40 liegt der Mitnehmerstift gemäss Fig. 1 an der Sperrklinke 40, diese in Sperrlage haltend an, wogegen bei Ausserbetriebslage der Sperrklinke 40 resp. bei Inbetriebslage des Verbindungselementes 25 der Mitnehmerstift auf einen Nocken 47 des von der Schwenkachse der Sperrklinke 40 gegenüberliegenden Sperrklinkenendes drückt (siehe Fig. 5). Die Betriebsstellung der Sperrklinke 40 wird durch Zurückschwenken des Verbindungslementes 25 und das Eigengewicht der Sperrklinke 40 erreicht. Die Klammern 48 vermitteln die Möglichkeit einer Verbindung der Zylinder 3, 4 zu deren gemeinsamen Transport.

## Patentansprüche

1. Rollenrotationseinrichtung zur Verarbeitung von zwischen zwei gegenläufig rotierend zusammenwirkenden Arbeitsrollen (3, 4) einer Verarbeitungseinheit verlaufenden Bahnen (1) oder Bogen aus Papier, textilen oder Kunststoffen, bei der die gegenseitig verspannten Arbeitsrollen durch ihre seitlichen Lagergehäuse (8, 9) einzeln mit einem Maschinenständer (143) der Einrichtung lösbar verbunden sind und die zum Abheben sowie zur seitlichen Ein- und Auslagerung der Arbeitsrollen (3, 4) eine Aushebevorrichtung aufweist, **dadurch gekennzeichnet, dass** die Aushebevorrichtung zur Vorspannung der Arbeitsrollen in der Betriebsstellung ausgebildet ist.

2. Einrichtung nach Anspruch 1, mit einer zum Perforieren, Stanzen oder Schneiden, insbesondere Querschneiden von Bahnen (1) oder Bogen ausgebildeten Verarbeitungseinheit, deren Arbeitsrollen (3, 4) parallele Drehachsen (12, 13) aufweisen.

3. Einrichtung nach Anspruch 1 oder 2, **dadurch gekennzeichnet, dass** die durch die Aushebevorrichtung (15) auf die Lagergehäuse (8, 9) der Arbeitsrollen, senkrecht zu deren Drehachsen (12, 13) wirkende Vorspannkraft in einer durch die Drehachsen (12, 13) gebildeten Ebene verläuft.

4. Einrichtung nach Anspruch 3, **dadurch gekennzeichnet, dass** die Aushebevorrichtung (15) jeweils beidseits der Arbeitsrollen bzw. Arbeitseinheit einen um eine Achse schwenkend antreibbaren Hebel (16, 17) aufweist, der mit einer Betätigungsvorrichtung (18) gekoppelt und mit einer einem mit den Arbeitsrollen verbundenen Aushebebock (28) zugeordneten Aufnahmevorrichtung (22) ausgebildet ist.

5. Einrichtung nach Anspruch 4, **dadurch gekennzeichnet, dass** der Hebel (16, 17) zweiarmig ausgebildet ist und die freien Enden der Hebelarme jeweils mit der Betätigungsvorrichtung (18) und der Aufnahmevorrichtung (22) verbunden resp. diesen zugeordnet sind.

6. Einrichtung nach Anspruch 4 oder 5, **dadurch gekennzeichnet, dass** das Hebelende der Aufnahmevorrichtung (22) eine dem Lagergehäuse (8) zugewendete, von einem Kraftpuffer beaufschlagte Spannpratze (23) aufweist.

7. Einrichtung nach einem der Ansprüche 4 bis 6 , **dadurch gekennzeichnet, dass** die Vorspannlage der Hebel (16, 17) durch einen mechanischen Anschlag gebildet wird.

8. Einrichtung nach Anspruch 6, **dadurch gekennzeichnet, dass** die Aufnahmevorrichtungen (22) der Hebel (16, 17) Teilwerk einer parallel zu der Drehachse einer Arbeitsrolle verlaufenden Verschiebebahn (24) sind.

9. Einrichtung nach Anspruch 8, **dadurch gekennzeichnet, dass** die Verschiebebahn (24) ein zwischen die Aufnahmevorrichtungen (22) versetzbares Verbindungselement (25) aufweist.

10. Einrichtung nach Anspruch 9, **dadurch gekennzeichnet, dass** das Verbindungselement (25) von einer Ausserbetriebsstellung in die Betriebsstellung der Verschiebebahn (24), in der es durch die Lagergehäuse (8) der einen Arbeitsrolle abgestützt ist, schwenkbar ausgebildet ist.

11. Einrichtung nach Anspruch 9 oder 10, **dadurch gekennzeichnet, dass** das Verbindungselement (25) mit einer der Aushebevorrichtung (15) resp. der Betätigungsvorrichtung (18) zugeordneten Verriegelungsvorrichtung verbunden ist.

12. Einrichtung nach Anspruch 11, **dadurch gekennzeichnet, dass** die Verriegelungsvorrichtung in der Ausserbetriebsstellung des Verbindungselementes zur Begrenzung einer Ausserbetriebsstellung der Arbeitseinheit vorgesehen ist, in welcher das Zusammenwirken durch Trennen der Arbeitsrollen unterbunden ist.

13. Einrichtung nach Anspruch 12, **dadurch gekennzeichnet, dass** die Verriegelungsvorrichtung eine Sperrklinke (40) aufweist, die mit dem Verbindungelement (25) antriebsverbunden ist.

14. Einrichtung nach Anspruch 13, **dadurch gekennzeichnet, dass** die Sperrklinke (40) in der Betriebsstellung einen auf die Betätigungsvorrichtung (18) einwirkenden Anschlag bildet.

15. Einrichtung nach einem der vorstehenden Ansprüche 4 bis 13, **dadurch gekennzeichnet, dass** die Betätigungsvorrichtung (18) ein mit einem Huborgan (34) verbundes Hebelgetriebe aufweist, das die Vorspannlage des auf die Arbeitseinheit einwirkenden Hebels (16, 17) bildet.

16. Einrichtung nach einem der Ansprüche 8 bis 14, **dadurch gekennzeichnet, dass** der Aushebebock (28) zwei beabstandete, an rechtwinklig zu den Drehachsen (12, 13) der Arbeitsrollen angeordneten Achsen frei lagernde Laufrollen (27) aufweist, die einen am Umfang etwa V-förmigen, die Auflage gegenüber der Verschiebebahn (24) bildenden Querschnitt aufweisen.

17. Einrichtung nach einem der Ansprüche 4 bis 15, **dadurch gekennzeichnet, dass** wenigstens eine der Aufnahmevorrichtungen (22) zur seitlichen Verlängerung der Verschiebebahn (24) vorgesehene Anschlussvorrichtung (39) aufweist.

## Claims

1. A rotary press device for the processing of lengths (1) or sheets of paper, textiles or plastics which travel between two cooperating working rollers (3, 4), which rotate in opposite directions, of a processing unit, wherein the working rollers which rotate in opposite directions are individually and removably attached, by their lateral bearing housings (8, 9), to a machine stand (143) of the device, which device comprises a lifting apparatus for the lifting and for the lateral installation and removal of the working rollers (3, 4), **characterised in that** the lifting apparatus is constructed for pre-stressing the working rollers in their operating position.

2. A device according to claim 1, comprising a processing unit which is designed for perforating, punching or cutting, particularly for the transverse cutting of lengths (1) or sheets, the working rollers of (3, 4) of which have parallel axes of rotation (12, 13).

3. A device according to claims 1 or 2, **characterised in that** the pre-stressing force which acts, due to the lifting apparatus (15), on the bearing housings (8, 9) of the working rollers, perpendicularly to the axes of rotation (12, 13) thereof, extends in a plane formed by the axes of rotation (12, 13).

4. A device according to claim 3, **characterised in that** on both sides of each of the working rollers or working unit the lifting device (15) comprises a lever (16, 17) which can be driven so that it swivels about an axis and which is coupled to an actuating apparatus (18), and is constructed with a receiving apparatus (22) which is associated with a lifting bracket (28) attached to the working rollers.

5. A device according to claim 4, **characterised in that** the lever (16, 17) is of two-armed construction and the free ends of the lever arms are each connected to the actuating apparatus (18) and to the receiving apparatus (22) or are associated therewith.

6. A device according to claims 4 or 5, **characterised in that** the lever end of the receiving apparatus (22) comprises a stressing lug (23) which faces the bearing housing (8) and which is acted upon by a force buffer.

7. A device according to any one of claims 4 to 6, **characterised in that** the pre-stressing position of the levers (16, 17) is formed by a mechanical limit stop.

8. A device according to claim 6, **characterised in that** the receiving apparatuses (22) of the levers (16, 17) are subsidiary mechanisms of a displacement track (24) which extends parallel to the axes of rotation of a working roller.

9. A device according to claim 8, **characterised in that** the displacement track (24) comprises a connection element (25) which can be displaced between the receiving apparatuses (22).

10. A device according to claim 9, **characterised in that** the connection element (25) is formed so that it can swivel from an inoperative position into the operating position of the displacement track (24), in which it is supported by the bearing housing (8) of one working roller.

11. A device according to claims 9 or 10, **characterised in that** the connection element (25) is attached to a locking apparatus which is associated with the lifting apparatus (15) or with the actuating apparatus (18).

12. A device according to claim 11, **characterised in that** the locking apparatus is provided in the inoperative position of the connection element in order to delimit an inoperative position of the working unit in which cooperation is prevented by separation of the working rollers.

13. A device according to claim 12, **characterised in that** the locking apparatus comprises a pawl (40) which is connected to and driven with the connection element (25).

14. A device according to claim 13, **characterised in that** in the operating position the pawl (40) forms a limit stop which acts on the actuating apparatus (18).

15. A device according to any one of the preceding claims 4 to 13, **characterised in that** the actuating apparatus (18) comprises a lever mechanism which is connected to a lifting element (34) and which forms the pre-stressing position of the lever (16, 17) which acts on the operating unit.

16. A device according to any one of claims 8 to 14, **characterised in that** the lifting bracket (28) comprises two spaced-apart running rollers (27), which are freely mounted on axes disposed at right-angles to the axes of rotation (12, 13) of the working rollers, and which at their periphery have an approximately V-shaped cross section which forms the support in relation to the displacement track (24).

17. A device according to any one of claims 4 to 15, **characterised in that** at least one of the receiving apparatuses (22) comprises an attachment device (39) which is provided for laterally lengthening the displacement track (24).

## Revendications

1. Dispositif à cylindres rotatifs pour transformer des bandes (1) ou des feuilles de papier, de tissu ou de matières plastiques défilant entre deux cylindres (3, 4) d'une unité de transformation qui coopèrent entre eux et qui tournent en sens inverse l'un par rapport à l'autre, dans lequel les cylindres immobilisés l'un par rapport à l'autre sont reliés individuellement de manière amovible par leurs logements de palier latéraux (8, 9) à un montant (143) de l'unité de transformation, et qui, pour soulever et pour monter et démonter les cylindres (3, 4) par le côté, présente un dispositif de levage, **caractérisé en ce que** le dispositif de levage est réalisé de manière à pouvoir précontraindre les cylindres dans la position de fonctionnement.

2. Dispositif selon la revendication 1, comprenant un unité de transformation réalisée pour perforer, poinçonner ou découper, notamment couper en travers des bandes (1) ou des feuilles, dont les cylindres (3, 4) présentent des axes de rotation parallèles (12, 13).

3. Dispositif selon la revendication 1 ou 2, **caractérisé en ce que** la force de précontrainte exercée par le dispositif de levage (15) sur les logements de palier (8, 9) des cylindres perpendiculairement à leurs axes de rotation (12, 13) s'étend dans un plan formé par les axes de rotation (12, 13).

4. Dispositif selon la revendication 3, **caractérisé en ce que** le dispositif de levage (15) présente chaque fois de part et d'autre des cylindres ou de l'unité de transformation un levier (16, 17) pouvant être entraîné de manière à pivoter autour d'un axe, qui est accouplé à un dispositif d'actionnement (18) et qui est réalisé muni d'un dispositif de réception (22) associé à un support de levage (28) relié aux cylindres.

5. Dispositif selon la revendication 4, **caractérisé en ce que** le levier (16, 17) est réalisé à deux bras et **en ce que** les extrémités libres des bras de levier sont respectivement reliées au dispositif d'actionnement (18) et associées au dispositif de réception (22).

6. Dispositif selon la revendication 4 ou 5, **caractérisé en ce que** l'extrémité de levier du dispositif de réception (22) présente une griffe de serrage (23) tournée vers le logement de palier (8) et sollicitée par un amortisseur.

7. Dispositif selon l'une des revendications 4 à 6, **caractérisé en ce que** la position de précontrainte des leviers (16, 17) est créée par une butée mécanique.

8. Dispositif selon la revendication 6, **caractérisé en ce que** les dispositifs de réception (22) des leviers (16, 17) font partie d'une trajectoire de déplacement (24) s'étendant parallèlement à l'axe de rotation d'un cylindre.

9. Dispositif selon la revendication 8, **caractérisé en ce que** la trajectoire de déplacement (24) présente un élément de liaison (25) pouvant être déplacé entre les dispositifs de réception (22).

10. Dispositif selon la revendication 9, **caractérisé en ce que** l'élément de liaison (25) est réalisé de façon pivotante pour pouvoir passer d'une position hors service à la position de fonctionnement de la trajectoire de déplacement (24), position dans laquelle il est supporté par le logement de palier (8) de l'un des cylindres.

11. Dispositif selon la revendication 9 ou 10, **caractérisé en ce que** l'élément de liaison (25) est relié à un dispositif de verrouillage associé respectivement au dispositif de levage (15) et au dispositif d'actionnement (18).

12. Dispositif selon la revendication 11, **caractérisé en ce que**, lorsque l'élément de liaison est mis hors service, le dispositif de verrouillage est prévu pour marquer une position hors service de l'unité de transformation, position dans laquelle les cylindres ne peuvent plus coopérer parce qu'ils sont séparés.

13. Dispositif selon la revendication 12, **caractérisé en ce que** le dispositif de verrouillage présente un cliquet d'arrêt (40) avec lequel l'élément de liaison (25) est en liaison d'entraînement.

14. Dispositif selon la revendication 13, **caractérisé en ce qu'**en position de fonctionnement, le cliquet d'arrêt (40) forme une butée agissant sur le dispositif d'actionnement (18).

15. Dispositif selon l'une des revendications précédentes 4 à 13, **caractérisé en ce que** le dispositif d'actionnement (18) présente un mécanisme à levier relié à un organe de levage (34), qui crée la position de précontrainte du levier (16, 17) agissant sur l'unité de transformation.

16. Dispositif selon l'une des revendications 8 à 14, **caractérisé en ce que** le support de levage (28) présente deux poulies dégagées et espacées (27) qui sont montées sur des axes perpendiculaires aux axes de rotation (12, 13) des cylindres et qui présentent une section transversale approximativement en forme de V au niveau du pourtour, laquelle section constitue le support par rapport à la trajectoire de déplacement (24).

17. Dispositif selon l'une des revendications 4 à 15, **caractérisé en ce qu'**au moins l'un des dispositifs de réception (22) présente un dispositif de raccordement (39) pour prolonger latéralement la trajectoire de déplacement (24).
